Europäisches Patentamt

European Patent Office

Office européen des brevets

(11) Veröffentlichungsnummer: **0 112 521**
**B1**

(12) EUROPÄISCHE PATENTSCHRIFT

(45) Veröffentlichungstag der Patentschrift: **02.03.88**

(51) Int. Cl.⁴: **C 01 B 25/41**, B 01 J 19/26

(21) Anmeldenummer: **83112231.2**

(22) Anmeldetag: **06.12.83**

(54) Verfahren und Anlage zur Herstellung von Alkalipolyphosphaten.

(30) Priorität: 17.12.82 DE 3246727
22.03.83 DE 3310272

(43) Veröffentlichungstag der Anmeldung:
04.07.84 Patentblatt 84/27

(45) Bekanntmachung des Hinweises auf die
Patenterteilung:
02.03.88 Patentblatt 88/09

(84) Benannte Vertragsstaaten:
AT BE CH DE FR GB IT LI NL SE

(56) Entgegenhaltungen:
FR-A-2 080 557
GB-A-1 153 231
GB-A-1 204 570

(73) Patentinhaber: HOECHST
AKTIENGESELLSCHAFT
Postfach 80 03 20
D-6230 Frankfurt am Main 80 (DE)

(72) Erfinder: Damman, Ben
Oude Vlissingseweg 63
NL-4336 AB Middelburg (NL)
Erfinder: Scheffer, Hans
Multatulilaan 2
NL-4282 BZ Vlissingen (NL)
Erfinder: De Witte, Paul
Beatrixstraat 41
NL-4361 EG Westkapelle (NL)
Erfinder: Krause, Johannes, Dr.
Gernotstrasse 5
D-5030 Hürth (DE)
Erfinder: Haas, Hans, Dr.
Bünnagelring 17
D-5357 Swisttal-Strassfeld (DE)
Erfinder: Kowalski, Werner
Am Ginsterbusch 7
D-5354 Weilerswist-Metternich (DE)

# 0 112 521

**Beschreibung**

Die vorliegende Erfindung betrifft ein Verfahren zur Herstellung von Alkalipolyphosphaten, insbesondere von Alkalitriphosphaten, aus Alkaliphosphatlösungen oder -suspensionen durch Versprühen der Ausgangsprodukte mittels mindestens einer Düse in einem Sprühturm durch eine von einem Brennerkranz erzeugte Flammzone sowie eine Anlage zur Durchführung des erfindungsgemäßen Verfahrens.

Es ist bekannt, Alkaliphosphate, insbesondere Alkalipolyphosphate, durch Versprühen von Alkaliphosphatlösungen oder -suspensionen mit Hilfe einer Mehrstoffdüse durch eine Flammzone in einem Sprühturm herzustellen. Dabei bewegt sich die versprühte Lösung im Gleichstrom mit den heißen Gasen der Flammzone nach unten und wird dabei sehr schnell entwässert und gegebenenfalls in kondensierte Phosphate überführt. Die Hauptmenge des gebildeten Phosphates wird im unteren Bereich des Sprühturmes gesammelt und von dort kontinuierlich ausgetragen, während die feineren Anteile des gebildeten Phosphates den Sprühturm mit dem Abgas verlassen und daraus durch nachgeschaltete Zyklone sowie durch eine Naßwäsche entfernt werden (vergl. "Ullmann Encyklopädie der technischen Chemie", 4. Auflage, Band 18, 1979, Seiten 326 bis 328).

Aus der europäischen Patentanmeldung Nr. 71 040 ist ein Verfahren zur Herstellung von Alkaliphosphaten, insbesondere von Alkalipolyphosphaten, durch Versprühen von Alkaliphosphatlösungen oder -suspensionen in einem Turm durch eine von einem Brennerkranz erzeugte Flammzone bekannt, bei welchem das Versprühen mit Hilfe mehrerer Einstoffdüsen bei Vordrucken der Alkaliphosphatlösungen oder -suspensionen von 6 bis 66 bar erfolgt.

Nachteilig ist bei den genannten Verfahren, daß es mit ihnen nicht möglich ist, grobkörnige Alkalipolyphosphate mit einem hohen Kondensationsgrad herzustellen, da offensichtlich die größeren Lösungströpfchen nur langsam trocknen und anschließend die Temperatur im unteren Teil des Sprühturmes für eine vollständige Kondensation nicht mehr ausreicht.

Schließlich ist aus der GB—A—1 153 231 ein Verfahren zur Herstellung eines dichten körnigen Natriumtripolyphosphates mit einer Korngröße im Bereich von 0,15 bis 0,84 mm und einer Schüttdichte von 950 bis 1300 g/l bekannt, bei welchem eine wäßrige Lösung mit einem Natriumorthophosphatgehalt von 35 bis 60 Gewichts % und einem Molverhältnis von Na:P von 1,63 bis 1,70 in ein Fließbett aus diskreten Natriumtripolyphosphatteilchen eingespeist wird, wobei die Teilchen im Fließbett auf einer Temperatur von 220 bis 400°C gehalten werden. Aus dem Fließbett werden ständig Teilchen entnommen und in eine grobe Fraktion (Teilchengröße über 0,84 mm) und in eine feine Fraktion (Teilchengröße unter 0,84 mm) getrennt. Die grobe Fraktion wird gemahlen und nach Vermischung mit einem Teil der feinen Fraktion in des Fließbett zurückgeführt, während der restliche Teil der feinen Fraktion als Produkt gewonnen wird.

Es ist Aufgabe der vorliegenden Erfindung, ein Verfahren zur Herstellung von Alkalipolyphosphaten, insbesondere von Alkalitriphosphaten, durch Versprühen von Alkaliphosphatlösungen oder -suspensionen in einen Sprühturm durch eine Flammzone sowie eine Anlage zu seiner Durchführung anzugeben, durch welche es möglich ist, grobkörnige Alkaliphosphate mit einem hohen Kondensationsgrad zu erhalten. Des wird erfindungsgemäß dadurch erreicht, daß zusätzlich feinkörnige Alkalipolyphosphate, insbesondere Alkalitriphosphate, von oben her in den Sprühturm eingebracht und gleichmäßig über den Sprühbereich der Düse(n) unter Bildung agglomerierter Produkte verteilt werden.

Das Verfahren gemäß der Erfindung kann weiterhin wahlweise auch noch dadurch ausgestaltet sein, daß

a) als feinkörnige Alkalipolyphosphate aus dem Abgas des Sprühturms abgeschiedene Stäube verwendet sind;

b) als feinkörnige Alkalipolyphosphate durch Absieben des am unteren Ende des Sprühturmes abgezogenen Produktes erhaltene Feinanteile verwendet sind;

c) als feinkörnige Alkalipolyphosphate aus dem Abgas des Sprühturmes abgeschiedene Stäube und durch Absieben des am unteren Ende des Sprühturmes abgezogenen Produktes erhaltene Feinanteile verwendet sind;

d) die feinkörnigen Alkalipolyphosphate Korngrößen von 20 bis 500 µm, vorzugsweise von 20 bis 250 µm, aufweisen;

e) das Gewichtsverhältnis des in den Sprühturm mit den Alkaliphosphatlösungen eingebrachten Feststoffes und der in den Sprühturm eingeführten feinkörnigen Alkalipolyphosphate von 0,2:1 bis 5:1, vorzugsweise von 0,5:1 bis 2:1, beträgt.

Eine Anlage zur Durchführung des erfindungsgemäßen Verfahrens, welche aus einem mit einem Deckel verschlossenen, zylindrischen Sprühturm mit einem spitz zulaufenden Unterteil besteht, wobei der Deckel mittig von einer Versprüheinrichtung durchdrungen ist und wobei der Deckel weiterhin von mehreren, konzentrisch um die Versprüheinrichtung angeordneten Brennern durchdrungen ist und wobei das Unterteil von einem schräg nach oben gerichteten Abgasrohr durchdrungen ist, kann dadurch gekennzeichnet sein, daß konzentrisch zu und mit Abstand von der Versprüheinrichtung eine den Deckel durchdringende Einrichtung zum Einbringen von Feststoff in den Sprühturm angeordnet ist.

Die Anlage kann weiterhin auch noch dadurch weitergebildet sein, daß

f) die Einrichtung zum Einbringen von Feststoff ein Feststoffschacht ist, welcher innerhalb des

2

Sprühturmes eine konische Form aufweist und in welchen außerhalb des Sprühturmes eine Feststoffzuführungsleitung einmündet;

g) der Feststoffschacht, innerhalb des Sprühturmes eine konische Erweiterung aufweist;

h) der Feststoffschacht innerhalb des Sprühturmes eine konische Einziehung aufweist;

i) die Einrichtung zum Einbringen von Feststoff aus mehreren, an Zuführungsrohren angeordneten Staubdüsen besteht, wobei die Zuführungsrohre außerhalb des Sprühturmes mit einer Feststoffzuführungsleitung strömungsmäßig verbunden sind;

j) die Staubdüsen schräg angestellt sind;

k) der Anstellwinkel der Staubdüsen in bezug auf die Vertikale 10 bis 90°, vorzugsweise 30 bis 60°, beträgt;

l) die Staubdüsen und die Versprüheinrichtung in einer Ebene angeordnet sind;

m) die horizontale Entfernung der Staubdüsen von der Versprüheinrichtung 60 bis 90% des horizontalen Abstandes der Versprüheinrichtung von den Brennern beträgt;

n) das Abgasrohr des Sprühturmes mit einem Zyklon über eine in seinem oberen Bereich einmündende Leitung strömungsmäßig verbunden ist, und daß der im Zyklon abgeschiedene Feststoff über ein Transportorgan in die Feststoffzuführungsleitung einführbar ist;

o) unterhalb des Sprühturmes ein mit ihm strömungsmäßig verbundener Kühler angeordnet ist, welcher mit einer einen oberen Stutzen und einen unteren Stutzen aufweisenden Siebeinrichtung strömungsmäßig verbunden ist, und daß die aus dem unteren Stutzen austretende feine Siebfraktion über ein weiteres Transportorgan in die Feststoffzuführungsleitung einführbar ist;

p) das Abgasrohr des Sprühturmes mit einem Zyklon über eine in seinem oberen Bereich einmündende Leitung strömungsmäßig verbunden ist, daß unterhalb des Sprühturmes ein mit ihm strömungsmäßig verbundener Kühler angeordnet ist, welcher mit einer einen oberen Stutzen und einen unteren Stutzen aufweisenden Siebeinrichtung strömungsmäßig verbunden ist, und daß die aus den unteren Stutzen austretende feine Siebfraktion über ein weiteres Transportorgan sowie der im Zyklon abgeschiedene Feststoff über ein Transportorgan in die Feststoffzuführungsleitung einführbar ist;

q) das Abgasrohr des Sprührturmes mit einem Zyklon über eine in seinen oberen Bereich einmündende Leitung strömungsmäßig verbunden ist, daß unterhalb des Sprühturmes ein mit ihm strömungsmäßig verbundener Kühler angeordnet ist, welcher mit einer einen oberen Stutzen und einen unteren Stutzen aufweisenden Siebeinrichtung strömungsmäßig verbunden ist, daß der im Zyklon abgeschiedene Feststoff über eine Leitung in den Kühler einleitbar ist, und daß die aus dem unteren Stutzen der Siebeinrichtung austretende feine Siebfraktion über ein weiteres Transportorgan einführbar ist.

Die Abriebfestigkeit der beim Verfahren gemäß der Erfindung erhaltenen Alkalipolyphosphate ist wesentlich höher als die der bekannten Alkalipolyphosphate. Dabei gilt aus Maß für die Abriebfestigkeit die mittlere Korngröße des Alkalipolyphosphates nach Durchführung eines standardisierten mechanischen Abriebtestes. Beim erfindungsgemäßen Alkalipolyphosphat sind nach dem Abriebtest mittlere Korngrößen von über 0,5 mm möglich.

Die mittlere Korngröße der beim Verfahren gemäß der Erfindung erhaltenen Alkalipolyphosphate ist größer als bei den bekannten Alkalipolyphosphaten. Trennt man beispielsweise die Siebfraktion unter 0,5 mm ab und bringt sie erdindungsgemäß von oben her in den Sprühturm ein, so wird ein Alkalipolyphosphat mit einer mittleren Korngröße von 1 mm erhalten.

Das mit dem Verfahren gemäß der Erfindung hergestellte Alkalipolyphosphat weist ein relativ enges Kornspektrum auf, d.h. seine Korngröße ist relativ einheitlicher als die der bekannten Alkalipolyphosphate.

Das Schüttgewicht des mit dem erfindungsgemäßen Verfahren hergestellten Alkalipolyphosphates ist im Vergleich zu den bekannten Alkalipolyphosphaten wesentlich abgesenkt. Besonders bei leichten Alkalipolyphosphaten, bei welchen das Schüttgewicht eine Qualitätsparameter darstellt, wird ein niedriges Schüttgewicht angestrebt. Selbst bei Zugabe von Blähmitteln, beispielsweise Harnstoff, zur Monophosphatlösung wird bei den bekannten Alkalipolyphosphaten bestenfalls ein Schüttgewicht von 400 g/l erreicht. Im Gegensatz dazu weisen die erfindungsgemäß hergestellten Alkalipolyphosphate Schüttgewichte von 350 g/l und weniger auf.

Mit dem Verfahren gemäß der Erfindung wird grobkörniges Alkalipolyphosphat ohne Zugabe von Bindemittel, d.h. ohne Fremdmaterial, allein durch Agglomeration erhalten.

Mit dem erfindungsgemäßen Verfahren wird erreicht, daß die Menge der im Zyklon abgeschiedenen Stäube bis etwa auf die Hälfte des Wertes nach dem Stand der Technik vermindert wird. Dabei stellt sich das Gleichgewicht zwischen den im Flüssigkeitssprühkegel adsorbierten Stäuben und den im Zyklon abgeschiedenen Stäuben nach etwa zwei Betriebsstunden des Sprühturmes ein.

In der beigefügten Zeichnung sind Anlagen zur Durchführung des erfindungsgemäßen Verfahrens schematisch und teilweise im Schnitt dargestellt. Dabei zeigen:

Figuren 1 und 5, Seitenansichten eines Sprühturmes mit angeschlossenem Zyklon

Figur 2, eine Seitenansicht eines Sprühturmes mit Siebeinrichtung

Figuren 3 und 4, Seitenansichten eines Sprühturmes mit Siebeinrichtung und angeschlossenem Zyklon.

Ein zylindrischer Sprühturm 1 ist mit einem konischen Dekkel 2 verschlossen und mit einem spitz zulaufenden Unterteil 3 versehen, wobei vom Unterteil 3 ein Abgasrohr 4 abgeht. Der konische Deckel 2 ist zentrisch von einer Versprüheinrichtung 6 durchdrungen.

Die Versprüheinrichtung 6 kann aus einem Speiserohr 15 bestehen, welches außerhalb des Sprühturmes 1 mit einem Lösungszuführungsrohr 5 mit darin angeordneten Druckerhöhungspumpe 7 strömungsmäßig verbunden ist, und an dessen entgegengesetztem Ende ein Sprühkopf 12 mit nach unten weisender Stirnfläche angeordnet ist, während sich oberhalb des Sprühkopfes 12 weitere Sprühköpfe 14 mit schräg nach unten auf die Innenwand des Sprühturmes 1 gerichteten Stirnflächen befinden. In die Stirnflächen der Sprühköpfe (12, 14) sind jweils mehrere Einstoffdüsen eingelassen.

Die Versprüheinrichtung 6 kann auch eine Mehrstoffdüse 28, beispielsweise nach der US—PS— 3 770 207, sein, welche außerhalb des Sprühturmes mit einem Lösungszuführungsrohr 5 und einem Zerstäubungsmittelzuführungsrohr 29 strömungsmäßig verbunden ist.

Mit Abstand von der Versprüheinrichtung 6 und auf einer konzentrisch zu ihr verlaufenden Kreislinie sind mehrere Brenner 11 angeordnet, welche den konischen Deckel 2 durchdringen und in den Sprühturm 1 hineinragen.

In den konischen Deckel 2 kann zwischen der Versprüheinrichtung 6 und den Brennern 11 ein konzentrisch zur Versprüheinrichtung 6 angeordneter Feststoffschacht 8 einmünden, welcher innerhalb des Sprühturmes 1 eine konische Form, entweder eine konische Erweiterung 9 oder eine konische Einziehung 23, aufweist. In den Feststoffschacht 8 mündet außerhalb des Sprühturmes 1 eine Feststoffzuführungsleitung 10 ein.

Der konische Deckel 2 kann zwischen der Versprüheinrichtung 6 und den Brennern 11 auch von mehreren Zuführungsrohren 26 durchdrungen sein, welche auf einer konzentrisch zur Versprüheinrichtung 6 verlaufenden Kreislinie angeordnet sind. An den innerhalb des Sprühturmes 1 befindlichen Enden der Zuführungsrohre 26 sind schräg angestellte Staubdüsen 27 befestigt, während die Enden der Zuführungsrohre 26 außerhalb des Sprühturmes 1 mit einer gegebenenfalls ringförmigen Feststoffzuführungsleitung 10 strömungsmäßig verbinden sind.

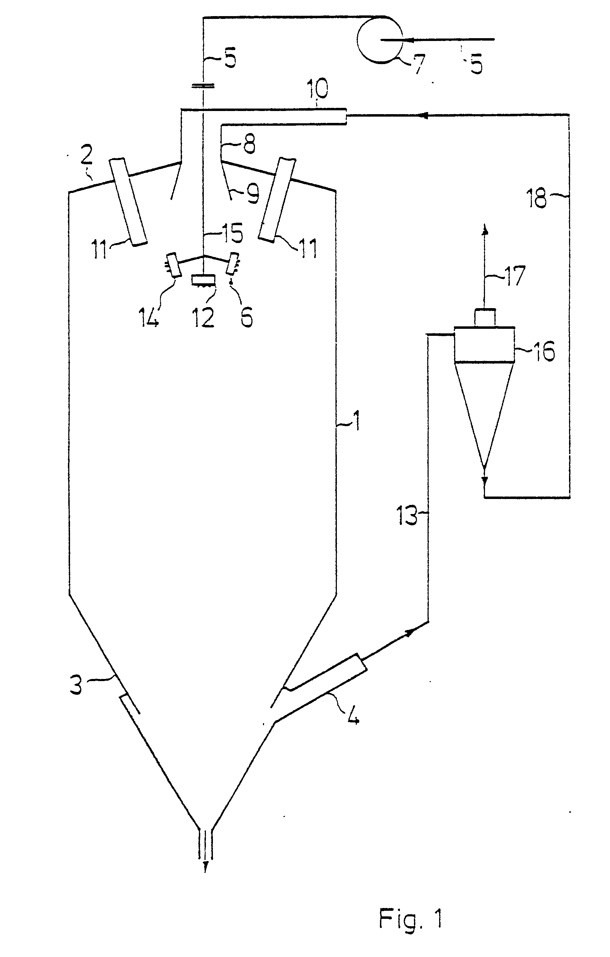

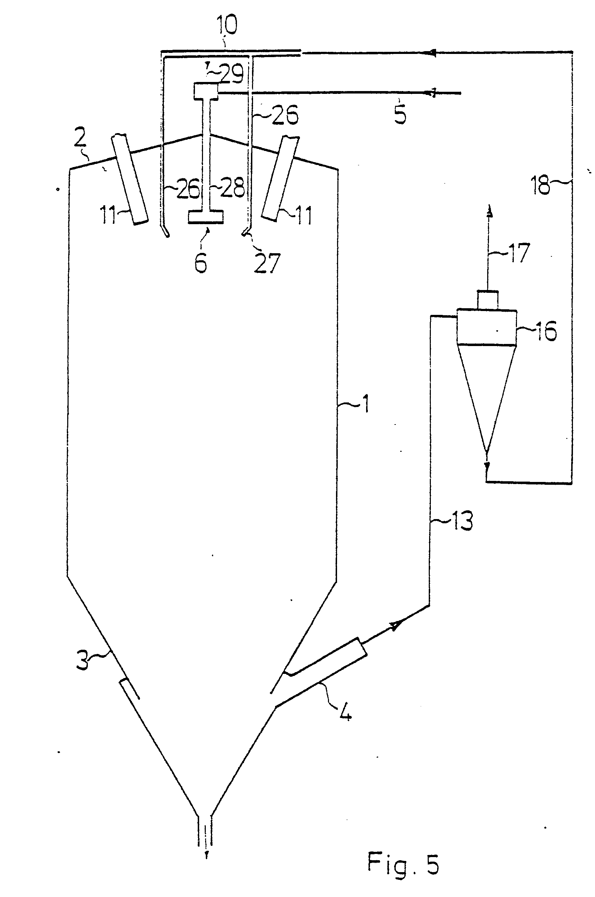

In den Figuren 1 und 5 ist das Abgasrohr 4 des Sprühturmes 1 über eine Leitung 13 mit einem Zyklon 16 verbunden. Während das Gas den Zyklon 16 über eine Leitung 17 verläßt, wird der abgeschiedene Festostoff von der Spitze des Zyklons 16 über das transportorgan 18 in die Feststoffzuführungsleitung 10 eingeführt.

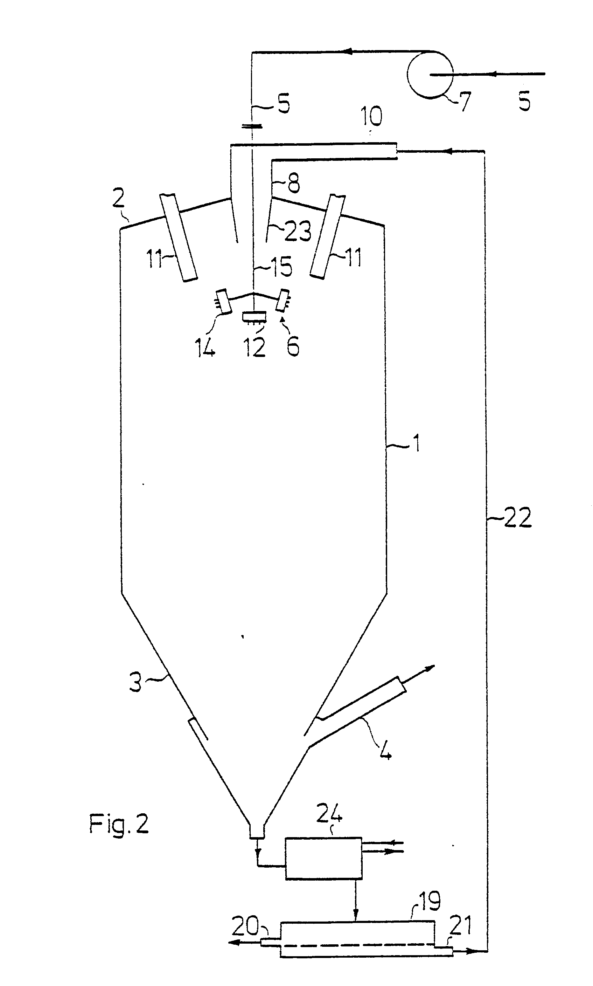

In Figur 2 sind unterhalb des Sprühturmes 1 ein Kühler 24 und eine Siebeinrichtung 19 angeordnet, wobei die Siebeinrichtung 19 das Sprühprodukt in eine feine und eine grobe Fraktion aufteilt. Die grobe Fraktion tritt aus der Siebeinrichtung 19 durch deren oberen Stutzen 20 aus, während die aus ihrem unteren Stutzen 21 austretende feine Fraktion über das weitere Transportorgan 22 in die Feststoffzuführungsleitung 10 gelangt.

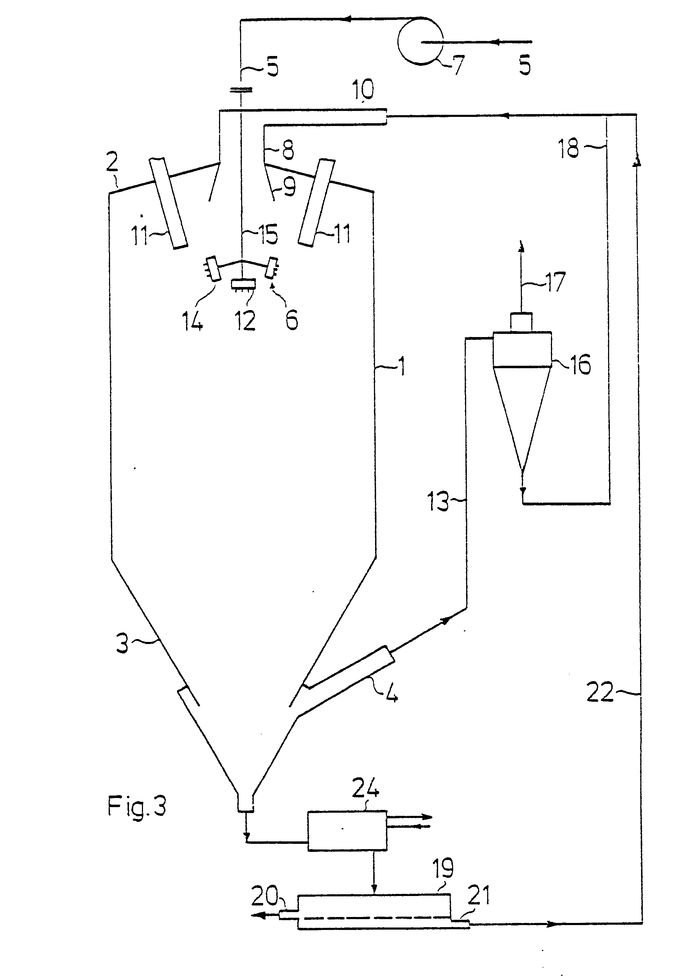

In Figur 3 sind unterhalb des Sprühturmes 1 ein Kühler 24 und eine Siebeinrichtung 19 angeordnet. Das Abgasrohr 4 des Sprühturmes 1 ist über eine Leitung 13 mit einem Zyklon 16 verbunden. Die feine Fraktion aus der Siebeinrichtung 19 wird über deren unteren Stutzen 21 und das weitere Transportorgan 22 ebenso in die Feststoffzuführungsleitung 10 eingeleitet wie der im Zyklon 16 abgeschiedene Feststoff über das Transportorgan 18.

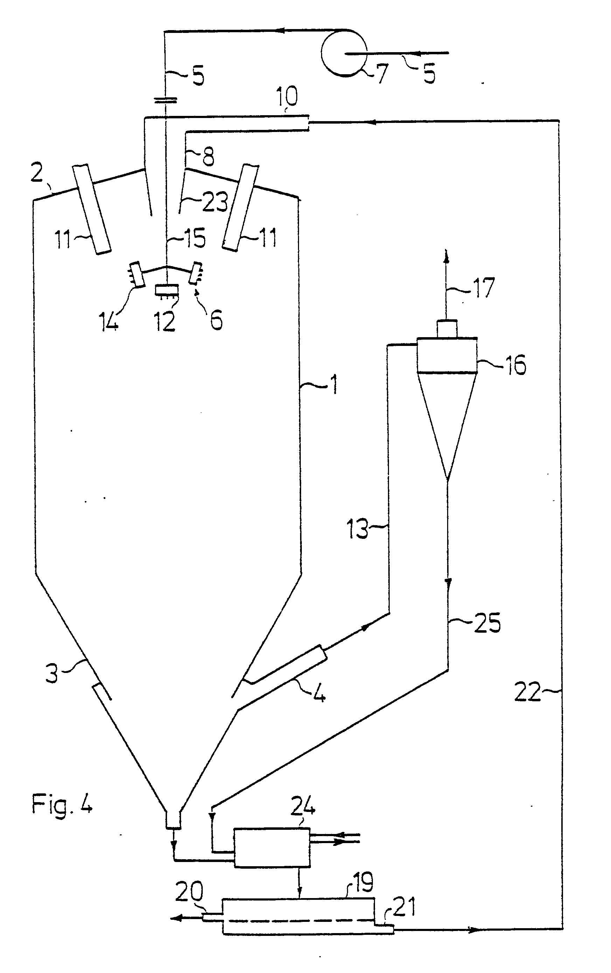

In Figur 4 sind unterhalb des Sprühturmes 1 ein Kühler 24 und eine Siebeinrichtung 19 angeordnet. Das Abgasrohr 4 des Sprühturmes 1 ist über eine Leitung 13 mit einem Zyklon 16 verbunden, wobei der im Zyklon 16 abgeschiedene Feststoff über eine weitere Leitung 25 dem Kühler 24 zugeführt wird. Die feine Fraktion aus der Siebeinrichtung 19 wird über deren unteren Stutzen 21 und das weitere Transportorgan 22 in die Feststoffzuführungsleitung 10 eingeleitet.

Die gemäß den folgenden Beispielen hergestellten Produkte wurden diesem Abriebtest unterworfen: 50 g des Produktes wurden nach Ermittelung seiner Siebanalyse in einen zylindrischen Behälter (Durchmesser: 11,5 cm; Höhe: 10,0 cm) aus rostfreiem Stahl eingefüllt. Nach Zugabe von acht Stahlkugeln (Durchmesser: 1,96 cm; Gewicht: 32,6 g) wurde der Behälter mit einem Deckel verschlossen. Der Behälter wurde horizontal auf eine elektrisch antreibbare Rollenbahn gelegt und darauf 5 Minuten mit 100 U/min rotieren gelassen. Anschließend wurde die Siebanalyse erneut ermittelt.

Beispiel 1 (nach dem Stand der Technik)
In einem Sprühturm von etwa 15 m Höhe und 7 m Durchmesser befand sich als Versprüheinrichtung ein Speiserohr, welches mit 5 Sprühköpfen strömungsmäßig verbunden war. Dabei waren in jeden Sprühkopf 7 Einstoffdüsen eingelassen und jede Düse wies eine Bohrung von 4 mm auf. Durch Die insgesamt 35 Düsen wurden 8 m³/h, entsprechend 12,5 t/h, Natriumorthophosphatlösung mit einem Feststoffgehalt von 60 Gew % und mit einem $Na_2O:P_2O_5$-Verhältnis von 5:3, welcher je m³ 4 kg Harnstoff als Blähmittel zugesetzt waren, unter einem Druck von 11 bar versprüht. Es resultierten insgesamt 6,4 t/h Natriumtripolyphosphat mit einem $Na_5P_3O_{10}$-Gehalt von 97,0%, einem Schüttgewicht von 430 g/l und folgendem Kornspektrum:

| | |
|---|---|
| >0,425 mm | 16,8% |
| >0,150 mm | 84,0% |
| >0,105 mm | 91,4% |
| >0,053 mm | 99,8% |

4

**0 112 521**

Das Endprodukt bestand pro Stunde aus einer Mischung von 1,2 t, welche mit dem Abgas aus dem Sprühturm ausgetragen und mit Hilfe von Zyklonen abgeschieden wurden ("Zyklonprodukt") und aus 5,2 t, welche am unteren Ende des Sprühturmes abezogen wurden ("Turmprodukt").

Das Zyklonprodukt wies folgendes Kornspektrum auf:

| | |
|---|---|
| >0,425 mm | 1,8% |
| >0,150 mm | 66,7% |
| >0,105 mm | 79,3% |
| >0,053 mm | 94,0% |

Das Turmprodukt wies folgendes Kornspektrum auf:

| | |
|---|---|
| >0,425 mm | 24,1% |
| >0,150 mm | 96,2% |
| >0,105 mm | 98,4% |
| >0,053 mm | 100,0% |

Das Endprodukt wies eine mittlere Korngröße von 320 μm auf. Nach Durchführung des Abriebtestes betrug die mittlere Korngröße 220 μm.

Beispiel 2 (gemäß der Erfindung)

In den Sprühturm nach Beispiel 1 wurden 8 m$^3$/h, entsprechend 12,5 t/h, Natriumorthophosphat-Lösung mit einem Feststoffgehalt von 60 Gew% und mit einem $Na_2O:P_2O_5$-Verhältnis von 5:3, welcher je m$^3$ 4 kg Harnstoff als Blähmittel zugesetzt waren, unter einem Druch von 11 bar versprüht. Gleichzeitig wurden in dem Sprühturm durch einen konzentrisch zur Versprüheinrichtung angeordneten Feststoffschacht (vergl. Figur 1) 1,3 t/h Zyklonprodukt eingeführt. Dabei entstanden 6,4 t/h eines Agglomerationsproduktes mit folgenden Eigenschaften:

| | | |
|---|---|---|
| $Na_3P_5O_{10}$-Gehalt: | 97,0% | |
| Schüttgewicht: | 420 g/l | |
| Kornspektrum: | >0,425 mm | 35,2% |
| | >0,150 mm | 94,3% |
| | >0,105 mm | 97,7% |
| | >0,053 mm | 99,7% |

Das Agglomerationsprodukt wies eine mittlere Korngröße von 415 μm auf. Nach Durchführung des Abriebtestes betrug die mittlere Korngröße 270 μm.

Beispiel 3 (gemäß der Erfindung)

In Anlehnung an Beispiel 1 wurde ein Tripolyphosphat mit folgenden Eigenschaften hergestellt:

| | | |
|---|---|---|
| $Na_3P_5O_{10}$-Gehalt: | 97,3% | |
| Schüttgewicht: | 420 g/l | |
| Kornspektrum: | >0,425 mm | 16,5% |
| | >0,150 mm | 76,7% |
| | >0,105 mm | 88,2% |
| | >0,053 mm | 98,1% |

Das Produkt wies eine mittlere Korngröße von 330 μm auf. Nach Durchführung des Abriebtestes betrug die mittlere Korngröße 200 μm.

Während der Herstellung des Tripolyphosphates wurde aus der Mischung von Zyklonprodukt und Turmprodukt (vergl. Beispiel 1) mit Hilfe einer Siebeinrichtung die Fraktion kleiner als 250 μm abgesiebt und durch einen konzentrisch zur Versprüheinrichtung angeordneten Feststoffschacht (vergl. Figur 4) in den Sprühturm zurückgeführt, wobei das Gewichtsverhältnis von in den Sprühturm eingeführter Natriumorthophosphatlösung und zurückgeführter Siebfraktion 0,8:1 betrug. Das dabei entstehende Agglomerationsprodukt hatte folgende Eigenschaften:

| | | |
|---|---|---|
| $Na_3P_5O_{10}$-Gehalt: | 96,8% | |
| Schüttgewicht: | 380 g/l | |
| Kornspektrum: | >0,425 mm | 59,9% |
| | >0,150 mm | 99,8% |
| | >0,105 mm | 100,0% |

Das Agglomerationsprodukt wies eine mittlere Korngröße von 535 μm auf. Nach Durchführung des Abriebtestes betrug die mittlere Korngröße 290 μm.

5

Beispiel 4 (gemäß der Erfindung)

In Anlehnung an Beispiel 1 wurde in Tripolyphosphat mit folgenden Eigenschaften hergestellt:

| $Na_5P_3O_{10}$-Gehalt: | 96,9% | |
|---|---|---|
| Schüttgewicht: | 420 g/l | |
| Kornspektrum: | >0,425 mm | 25,2% |
| | >0,150 mm | 86,2% |
| | >0,105 mm | 92,6% . |
| | >0,053 mm | 97,5% |

Das Produkt wies eine mittlere Korngröße von 360 µm auf. Nach Durchführung des Abriebtestes betrug die mittlere Korngröße 215 µm.

Während der Herstellung des Tripolyphosphates wurde aus der Mischung von Zyklonprodukt und Turmprodukt (vergl. Beispiel 1) mit Hilfe einer Siebeinrichtung die Fraktion kleiner als 500 µm abgesiebt und durch einen konzentrisch zur Versprüheinrichtung angeordneten Feststoffschacht (vergl. Figur 4) in dem Sprühturm zurückgeführt, wobei das Gewichtsverhältnis von in den Sprühturm eingeführter Natriumorthophosphatlösung und von zurückgeführtem, abgesiebtem Tripolyphosphat 0,35:1 betrug. Das dabi entstehende Agglomerationsprodukt hatte folgende Eigenschaften:

| $Na_5P_3O_{10}$-Gehalt: | 97,2% | |
|---|---|---|
| Schüttgewicht: | 340 g/l | |
| Kornspektrum: | >0,840 mm | 25,3% |
| | >0,425 mm | 99,0% |

Das Agglomerationsprodukt wies eine mittlere Korngröße von 810 µm auf. Nach Durchführung des Abriebtestes betrug die mittlere Korngröße 375 µm.

Beispiel 5 (gemäß der Erfindung)

Beispiel 2 wurde mit der Änderung wiederholt, daß zusätzlich zu dem Zyklonprodukt Tripolyphosphat einer Siebfraktion kleiner als 150 µm in einem konzentrisch zur Versprüheinrichtung angeordneten Feststoffschacht (vergl. Figur 3) in den Sprühturm zurückgeführt wurde, wobei die Siebfraktion aus dem am unteren Ende des Sprühturmes abgezogenen Tripolyphosphat erhlaten wurde. Dabei betrug das Gewichtsverhältnis von Natriumorthophosphatlösung, Zyklonprodukt und Siebfraktion, welche gemeinsam in den Sprühturm eingeführt wurden; 9:2:1.

Das durch die Einführung der drei genannten Komponenten in den Sprühturm entstehende Agglomerationsprodukt hatte folgende Eigenschaften:

| $Na_5P_3O_{10}$-Gehalt: | 96,5% | |
|---|---|---|
| Schüttgewicht: | 400 g/l | |
| Kornspektrum | >0,425 mm | 42,2% |
| | >0,150 mm | 99,2% |
| | >0,105 mm | 100,0% |

Das Agglomerationsprodukt wies eine mittlere Korngröße von 440 µm auf. Nach Durchführung des Abriebtestes betrug die mittlere Korngröße 260 µm.

Beispiel 6 (gemäß der Erfindung)

Beispiel 5 wurde mit der Änderung wiederholt, daß zusätzlich zu dem Zyklonprodukt Tripolyphosphat einer Siebfraktion kleiner als 250 µm in den Sprühturm zurückgeführt wurde. Das Gewichtsverhältnis von Natriumorthophosphatlösung, Zyklonprodukt und Siebfraktion betrug 1,6:1:1.

Das Agglomerationsprodukt hatte folgende Eigenschaften:

| $Na_5P_3O_{10}$-Gehalt: | 97,4% | |
|---|---|---|
| Kornspektrum: | >0,425 mm | 56,4% |
| | >0,150 mm | 99,6% |
| | >0,105 mm | 100,0% |
| Schüttgewicht: | 370 g/l | |

Das Agglomerationsprodukt wies eine mittlere Korngröße von 520 µm. Nach Durchführung des Abriebtestes betrug die mittlere Korngröße 290 µm.

Beispiel 7 (gemäß der Erfindung)

In einem Sprühturm von etwa 17 m Höhe und 6 m Durchmesser befand sich als Versprüheinrichtung eine Mehrstoffdüse, welche mit 4,5 t/h Wasserdampf (Temperatur: 300°C) als Zerstäubungsmittel und mit 10,5 m³/h, entsprechend 16,8 t/h, Natriumorthophosphatlösung mit einem Feststoffgehalt von 30 Gew% sowie mit einem Na₂O:P₂O₅-Verhlältnis von 5:3, welcher je m³ 4 kg Harnstoff als Blähmittel zugesetzt waren, beaufschlagt wurde. Gleichzeitig wurde in den Sprühturm durch zwei konzentrisch zur Versprüheinrichtung angeordnete Zuführungsrohre, welche an ihren Enden im Winkel von 45° in bezug auf die Vertikale angestellte Staubdüsen aufweisen, Zyklonprodut eingeführt, wobei die Staubdüse und die Mehrstoffdüse in einer Ebene angeordnet waren, während die horizontale Entfernung der Staubdüsen von der Mehrstoffdüse 600 mm betrug. Der horizontale Abstand der Brenner von der Mehrstoffdüse betrug 700 mm.

Es resultierten je Stunde 8,8 t Natriumtripolyphosphat, wobei sich in Abhängigkeit von der Betriebszeit des Sprühturmes das Verhältnis von Turmprodukt zu Zylkonprodukt wie folgt änderte:

| Betriebszeit [h] | Turmprodukt [t/h] | Zyklonprodukt [t/h] |
|---|---|---|
| 0 | 5,3 | 3,5 |
| 1 | 6,1 | 2,7 |
| 2 | 6,2 | 2,6 |
| 3 | 6,2 | 2,6 |

Das in der dritten Stunde der Betriebszeit anfallende Produkt hatte folgende Eigenschaften:

Na₅P₃10-Gehalt:      97,2%
Schüttgewicht:        480 g/l
Kornspektrum:         >0,425 mm         34,1%
                      >0,150 mm         67,0%
                      >0,105 mm         88,3%
                      >0,053 mm         97,1%

Das Produkt wies eine mittlere Korngröße von 350 μm auf. Nach Durchführung des Abriebtestes betrug die mittlere Korngröße 190 μm.

Beispiel 8 (gemäß der Erfindung)

Beispiel 7 wurde mit der Änderung wiederholt, daß die horizontale Entfernung der Staubdüse von der Mehrstoffdüse 450 mm betrug.

In Abhängigkeit von der Betriebszeit des Sprühturmes änderte sich das Verhältnis von Turmprodukt zu Zylkonprodukt wie folgt:

| Betriebszeit [h] | Turmprodukt [t/h] | Zyklonprodukt [t/h] |
|---|---|---|
| 0 | 5,3 | 3,5 |
| 1 | 6,2 | 2,6 |
| 2 | 7,1 | 1,7 |
| 3 | 7,1 | 1,7 |
| 4 | 7,1 | 1,7 |
| . | . | . |
| . | . | . |
| . | . | . |
| 15 | 7,1 | 1,7 |
| 16 | 7,1 | 1,7 |

Das in der 16. Stunde der Betriebszeit anfallende Produkt hatte folgende Eigenschaften:

Na₅P₃O₁₀-Gehalt:     97,3%
Schüttgewicht:        470 g/l
Kornspektrum:         >0,425 mm         36,8%
                      >0,150 mm         72,0%
                      >0,105 mm         90,1%
                      >0,053 mm         98,0%

Das Produkt wies eine mittlere Korngröße von 370 μm auf. Nach Durchführung des Abriebtestes betrug die mittlere Korngröße 200 μm.

7

# 0 112 521

**Patentansprüche**

1. Verfahren zur Herstellung von Alkalipolyphosphaten, insbesondere von Alkalitriphosphaten, aus Alkaliphosphatlösungen oder -suspensionen durch Versprühen der Ausgangsprodukte mittels mindestens einer Düse in einem Sprühturm durch eine von einem Brennerkranz erzeugte Flammzone, dadurch gekennzeichnet, daß zusätzlich feinkörnige Alkalipolyphosphate, insbesondere Alkalitriphosphate, von oben her in den Sprühturm eingebracht und gleichmäßig über den Sprühbereich der Düse(n) unter Bildung agglomerierter Produkte verteilt werden.

2. Verfahren nach Anspruch 1, dadurch gekennzeichnet, daß als feinkörnige Alkalipolyphosphate aus dem Abgas des Sprühturms abgeschiedene Stäube verwendet sind.

3. Verfahren nach Anspruch 1, dadurch gekennzeichnet, daß als feinkörnige Alkalipolyphosphate durch Absieben des am unteren Ende des Sprühturmes abgezogenen Produktes erhaltene Feinanteile verwendet sind.

4. Verfahren nach Anspruch 1, dadurch gekennzeichnet, daß als feinkörnige Alkalipolyphosphate aus dem Abgas des Sprühturmes abgeschiedene Stäube und durch Absieben des am unteren Ende des Sprühturmes abgezogenen Produktes erhaltene Feinanteile verwendet sind.

5. Verfahren nach einem der Ansprüche 1 bis 4, dadurch gekennzeichnet, daß die feinkörnigen Alkalipolyphosphate Korngrößen von 20 bis 500 µm, vorzugsweise von 20 bis 250 µm, aufweisen.

6. Verfahren nach einem der Ansprüche 1 bis 5, dadurch gekennzeichnet, daß das Gewichtsverhältnis des in den Sprühturm mit den Alkaliphosphatlösungen eingebrachten Feststoffes und der in den Sprühturm eingeführten feinkörnigen Alkalipolyphosphate von 0,2:1 bis 5:1, vorzugsweise von 0,5:1 bis 2:1, beträgt.

7. Anlage zur Durchführung des Verfahrens nach einem der Ansprüche 1 bis 6, bestehend aus einem mit einem Deckel verschlossenen, zylindrischen Sprühturm mit einem spitz zulaufenden Unterteil, wobei der Deckel mittig von einer Versprüheinrichtung durchdrungen ist und wobei der Dekkel weiterhin von mehreren, konzentrisch um die Versprüheinrichtung angeordneten Brennern durchdrungen ist und wobei das Unterteil von einem schräg nach oben gerichteten Abgasrohr durchdrungen ist, dadurch gekennzeichnet, daß konzentrisch zu und mit Abstand von der Versprüheinrichtung (6) eine den Deckel (2) durchdringende Einrichtung zum Einbringen von Feststoff in den Sprühturm (1) angeordnet ist.

8. Anlage nach Anspruch 7, dadurch gekennzeichnet, daß die Einrichtung zum Einbringen von Feststoff ein Feststoffschacht (8) ist, welcher innerhalb des Sprühturmes (1) eine konische Form aufweist und in welchen außerhalb des Sprühturmes (1) eine Feststoffzuführungsleitung (10) einmündet.

9. Anlage nach Anspruch 8, dadurch gekennzeichnet, daß der Feststoffschacht (8) innerhalb des Sprühturmes (1) eine konische Erweiterung (9) aufweist.

10. Anlage nach Anspruch 8, dadurch gekennzeichnet, daß der Feststoffschacht (8) innerhalb des Sprühturmes (1) eine konische Einziehung (23) aufweist.

11. Anlage nach Anspruch 7, dadurch gekennzeichnet, daß die Einrichtung zum Einbringen von Feststoff aus mehreren, an Zuführungsrohren (26) angeordneten Staubdüsen (27) besteht, wobei die Zuführungsrohre (26) außerhalb des Sprühturmes (1) mit einer Feststoffzuführungsleitung (10) strömungsmäßig verbunden sind.

12. Anlage nach Anspruch 11, dadurch gekennzeichnet, daß die Staubdüsen (27) schräg angestellt sind.

13. Anlage nach Anspruch 12, dadurch gekennzeichnet, daß der Anstellwinkel der Staubdüsen in bezug auf die Vertikale 10 bis 90°, vorzugsweise 30 bis 60°, beträgt.

14. Anlage nach einem der Ansprüche 11 bis 13, dadurch gekennzeichnet, daß die Staubdüsen (27) und die Versprüheinrichtung (6) in einer Ebene angeordnet sind.

15. Anlage nach einem der Ansprüche 11 bis 14, dadurch gekennzeichnet, daß die horizontale Entfernung der Staubdüsen (27) von der Versprüheinrichtung (6) 60 bis 90% des horizontalen Abstandes der Versprüheinrichtung (6) von den Brennern (11) beträgt.

16. Anlage nach einem der Ansprüche 7 bis 15, dadurch gekennzeichnet, daß das Abgasrohr (4) des Sprühturmes (1) mit einem Zyklon (16) über eine in seinem oberen Bereich einmündende Leitung (13) strömungsmäßig verbunden ist, und daß der im Zyklon (16) abgeschiedene Feststoff über eine Transportorgan (18) in die Feststoffzuführungsleitung (10) einführbar ist.

17. Anlage nach einem der Ansprüche 7 bis 15, dadurch gekennzeichnet, daß unterhalb des Sprühturmes (1) ein mit ihm strömungsmäßig verbundener Kühler (24) angeordnet ist, welcher mit einer einen oberen Stutzen (20) und einen unteren Stutzen (21) aufweisenden Siebeinrichtung (19) strömungsmäßig verbunden ist, und daß die aus dem unteren Stutzen (21) austretende feine Siebfraktion über ein weiteres Transportorgan (22) in die Feststoffzuführungsleitung (10) einführbar ist.

18. Anlage nach einem der Ansprüche 7 bis 15, dadurch gekennzeichnet, daß das Abgasrohr (4) des Sprühturmes (1) mit einem Zyklon (16) über eine in seinem oberen Bereich einmündende Leitung (13) strömungsmäßig verbunden ist, daß unterhalb des Sprühturmes (1) ein mit ihm strömungsmäßig verbundener Kühler (24) angeordnet ist, welcher mit einer einen oberen Stutzen (20) und einen unteren Stutzen (21) aufweisenden Siebeinrichtung (19) strömungsmäßig verbunden ist, und daß die aus dem unteren Stutzen (21) austretende feine Siebfraktion über ein weiteres Transportorgan (22) sowie der im

**0 112 521**

Zyklon (16) abgeschiedene Feststoff über ein Transportorgan (18) in die Feststoffzuführungsleitung (10) einführbar ist.

19. Anlage nach einem der Ansprüche 7 bis 15, dadurch gekennzeichnet, daß das Abgasrohr (4) des Sprühturmes (1) mit einem Zyklon (16) über eine in seinen oberen Bereich einmüdende Leitung (13) strömungsmäßig verbunden ist, daß unterhalb des Sprühturmes (1) ein mit ohm strömungsmäßig verbundener Kühler (24) angeordnet ist, welcher mit einer einen oberen Stutzen (20) und einen unteren Stutzen (21) aufweisenden Siebeinrichtung (19) strömungsmäßig verbunden ist, daß der im Zyklon (16) abgeschiedene Feststoff über eine Leitung (25) in den Kühler (24) einleitbar ist, und daß die aus dem unteren Stutzen (21) der Siebeinrichtung (19) austretende feine Siebfraktion über ein weiteres Transportorgan (22) in die Feststoffzuführungsleitung (10) einführbar ist.

**Revendications**

1. Procédé de préparation de polyphosphates alcalins, en particulier de triphosphates alcalins, à partir de solutions ou de suspensions de phosphates alcalins par projection des produits de départ à l'aide d'au moins une buse dans une tour de pulvérisation à travers une zone de flammes produite par une couronne de brûleurs, caractérisé en ce que l'on introduit, en outre, par le haut dans la tour de pulvérisation et on répartit régulièrement, dans la région de projection de la ou des buses, des polyphosphates, alcalins en grains fins, en particulier des triphosphates alcalins, avec formation de produits agglomérés.

2. Procédé selon la revendication 1, caractérisé en ce qu'on utilise comme polyphosphates alcalins à grains fins des poussières séparées du gaz résiduaire de la tour de pulvérisation.

3. Procédé selon la revendication 1, caractérisé en ce qu'on utilise comme polyphosphates alcalins à grains fins des fines obtenues par tamisage du produit soutiré à l'extrémité inférieure de la tour de pulvérisation.

4. Procédé selon la revendication 1, caractérisé en ce qu'on utilise comme polyphosphates alcalins à grains fins des poussières séparées du gaz d'évacuation de la tour de pulvérisation et des fines obtenues par tamisage du produit soutiré à l'extrémité inférieure de la tour de pulvérisation.

5. Procédé selon l'une des revendications 1 à 4, caractérisé en ce que les polyphosphates alcalins présentent une granulométrie comprise entre 20 et 500 µm, de préférence 20 et 250 µm.

6. Procédé selon l'une des revendications 1 à 5, caractérisé en ce que le rapport pondéral de la matière solide introduite avec les solutions de phosphates alcalins dans la tour de pulvérisation et des polyphosphates alcalins à grains fins introduits dan la tour de pulvérisation est de 0,2:1 à 5:1, de préférence 0,5:1 à 2:1.

7. Appareillage pour la mise en oeuvre du procédé selon l'une des revendications 1 à 6, qui consiste en une tour de pulvérisation cylindrique à extrémité inférieure effilée et fermée par un couvercle, ce denier étant traversé par un dispositif de pulvérisation disposé en son centre et en outre par plusieurs brûleurs disposés concentriquement autour du dispositif de pulvérisation et la partie inférieure étant traversée par un conduit d'évacuation de gaz résiduaire incliné vers le haut, caractérisé en ce qu'un dispositif pour l'amenée de matière solide dans la tour de pulvérisation (1) traversant le couvercle (2) est agencé concentriquement par rapport au dispositif de pulvérisation (6) et espacé de celui-ci.

8. Appareillage selon la revendication 7, caractérisé en ce que le dispositif d'amenée de matière solide est un puits (8) qui est conique à l'intérieur de la tour de pulvérisation (1) et dans lequel débouche, à l'extérieur de la tour de pulvérisation, un conduit d'amenée de matière solide (10).

9. Appareillage selon la revendication 8, caractérisé en ce que le puits d'amenée de matière solide (8) présente un évasement conique (9) à l'intérieur de la tour de pulvérisation (1).

10. Appareillage selon la revendication 8, caractérisé en ce que le puits d'amenée de matière solide (8) présente un rétrécissement conique (23) à l'intérieur de la tour de pulvérisation (1).

11. Appareillage selon la revendication 7, caractérisé en ce que le dispositif d'amenée de matière solide consiste en plusieurs tubes d'amenée (26) se terminant dans des buses de projection de poussière, les tubes d'amenée (26) étant reliés dans le sens de l'écoulement à un conduit d'amenée de matière solide (10) à l'extérieur de la tour de pulvérisation (1).

12. Appareillage selon la revendication 11, caractérisé en ce que les buses de projection de poussière (27) sont inclinées.

13. Appareillage selon la revendication 12, caractérisé en ce que les buses de projection de poussière sont inclinées suivant des angles de 10 à 90°, de préférence 30 à 60°, par rapport à la verticale.

14. Appareillage selon l'une des revendications 11 à 13, caractérisé en ce que les buses de projection (27) et le dispositif de pulvérisation (6) sont agencés dans un plan.

15. Appareillage selon l'une des revendications 11 à 14, caractérisé en ce que la distance horizontale du dispositif de pulvérisation (6) aux buses de projection de poussière (27) est de 60—90% de la distance horizontale des brûleurs (11) au dispositif de pulvérisation (6).

16. Appareillage selon l'une des revendications 7 à 15, caractérisé en ce que le conduit de gaz résiduaire (4) de la tour de pulvérisation (1) est relié dans le sens de l'écoulement à un cyclone (16) par un conduit (13) débouchant dans sa partie supérieure et en ce que la matière solide séparée dans le cyclone (16) peut être introduite par l'intermédiaire d'un organe de transport (18) dans le conduit d'amenée de matière solide.

17. Appareillage selon l'une des revendications 7 à 15, caractérisé en ce qu'un réfrigérant (24), qui est relié dans le sens de l'écoulement à un dispositif de tamisage (19) présentant une tubulure supérieure (20) et une tubulure inférieure (21), est disposé au-dessous de la tour de pulvérisation (1) et relié à celle-ci, dans le sens d'écoulement, et la fraction de fines sortant par la tubulure inférieure (21) peut être introduite par l'intermédiaire d'un organe de transport supplémentaire (22) dans le conduit d'amenée de matière solide (10).

18. Appareillage selon l'une des revendications 7 à 15, caractérisé en ce que le conduit du gaz résiduaire (4) de la tour de pulvérisation (1) est relié dans le sens d'écoulement par un conduit (13) débouchant dans sa partie supérieure à un cyclone (16), en ce qu'un réfrigérant (24), qui est relié dans le sens de l'écoulement à un dispositif de tamisage (19) présentant une tubulure supérieure (20) et une tubulure inférieure (21), est disposé au-dessous de la tour de pulvérisation (1) et relié à celle-ci, et en ce que la fraction de fines sortant par la tubulure inférieure (21) peut être introduite par un élément de transport (22) supplémentaire, de même que la matière solide séparée dans le cyclone (16) peut être introduite par un élément de transport (18) dans le conduit d'amenée de matière solide (10).

19. Appareillage selon l'une des revendications 7 à 15, caractérisé en ce que le conduit du gaz résiduaire (4) de la tour de pulvérisation (1) est relié dans le sens de l'écoulement à un cyclone (16) par un conduit (13) débouchant dans sa partie supérieure, en ce qu'un réfrigérant (24), qui est relié dans le sens de l'écoulement à un dispositif de tamisage (19) présentant une tubulure supérieure (20) et une tubulure inférieure (21), est disposé au-dessous de la tour de pulvérisation (1) et relié à celle-ci, en ce que la matière solide séparée dans le cyclone (16) peut être introduite par l'intermédiaire d'un conduit (25) dans le réfrigérant (24), et en ce que la fraction de fines sortant par la tubulure inférieure (21) du dispositif de tamisage (19) peut être introduite par un organe de transport supplémentaire (22) dans le conduit d'amenée de matière solide (10).

**Claims**

1. Process for making alkali metal polyphosphates, especially alkali metal triphosphates, from an alkali metal phosphate solution or suspension by spraying the feed materials by means of at least one nozzle inside a spray tower through a flame zone produced by a plurality of burners arranged in annular fashion, which comprises: additionally introducing fine particulate alkali metal polyphosphates, especially alkali metal triphosphates, into the spray tower from above and regularly distributing them across the spray region of the nozzle(s) and thereby effecting the formation of agglomerated products.

2. Process as claimed in claim 1, wherein dusty material separated from the gas issuing from the spray tower is used as fine particulate alkali metal polyphosphate.

3. Process as claimed in claim 1, wherein fines obtained by screening the product taken from the base portion of the spray tower are used as fine particulate alkali metal polyphosphate.

4. Process as claimed in claim 1, wherein dusty material separated from the gas issuing from the spray tower and fines obtained by screening the product taken from the base portion of the spray tower are used as fine particulate alkali metal phosphate.

5. Process as claimed in any of claims 1 to 4, wherein the fine particulate alkali metal polyphosphates have a particle size of 20 to 500 µm. preferably 20 to 250 µm.

6. Process as claimed in any of claims 1 to 5, wherein the ratio by weight of the solid matter introduced into the spray tower together with the alkali metal phosphate solution or suspension and fine particulate alkali metal polyphosphates introduced into the spray tower is 0.2:1 to 5:1, preferably 0.5:1 to 2:1.

7. Apparatus for carrying out the process as claimed in any of claims 1 to 6 comprising a cylindrical spray tower having a tapered lower end and being closed by means of a cover; the cover having a spray means passed centrally through it and also a plurality of burners arranged concentrically around the spray means; and the base portion has an upwardly inclined off-gas outlet passed through it, caracterized in that a feeding means for introducing solid matter into the spray tower (1) is passed through the cover (2) concentrically with respect to the spray means (6) and spaced therefrom.

8. Apparatus as claimed in claim 7, wherein the solid matter feed means is a shaft (8) conically shaped inside the spray tower (1) and provided with a solid matter feed pipe (10) outside the spray tower (1).

9. Apparatus as claimed in claim 8, wherein the solid matter feed shaft (8) has an end portion (9) conically widened inside the spray tower (1).

10. Apparatus as claimed in claim 8, wherein the solid matter feed shaft (8) has an end portion (23) conically tapered inside the spray tower (1).

11. Apparatus as claimed in claim 7, wherein the solid matter feed means comprises a plurality of feed pipes (26) terminating in dust distributor nozzles (27), the feed pipes (26) being flow-connected to the solid matter feed pipe (10) outside the spray tower (1).

12. Apparatus as claimed in claim 11, wherein the dust distributor nozzles (27) are bevelled.

13. Apparatus as claimed in claim 12, wherein the dust distributor nozzles are bevelled at an angle of 10 to 90°, preferably 30 to 60°, with respect to the vertical axis.

14. Apparatus as claimed in any of claims 11 to 13, wherein the dust distributor nozzles (27) and spray means (6) are arranged level with each other.

15. Apparatus as claimed in any of claims 11 to 14, wherein the horizontal separation of the dust distributor nozzles (27) from the spray means (6) is 60 to 90% the horizontal separation of the spray means (6) from the burners (11).

16. Apparatus as claimed in any of claims 7 to 15, wherein the upper end portion of the off-gas outlet (4) of the spray tower (1) opens into a conduit (13) flow-connecting it to a cyclone (16), solid matter separated in the cyclone (16) being deliverable by a conveying means (18) into the solid matter feed pipe (10).

17. Apparatus as claimed in any of claims 7 to 15, wherein the lower end of the spray tower (1) has a flow connection running to a cooler (24) disposed below it, the cooler (24) being flow-connected to a screening device (19) provided with an upper drain connection (20) and lower drain connection (21), screenings coming from the lower connection (21) being deliverable by a further conveying means (22) into the solid matter feed pipe (10).

18. Apparatus as claimed in any of claims 7 to 15, wherein the upper end portion of the outlet (4) of the spray tower (1) opens into a conduit (13) flow-connecting it to a cyclone (16) and the lower end of the spray tower (1) has a flow-connection running to a cooler (24) disposed below it, the cooler (24) being flow-connected to a screening device provided with an upper drain connection (20) and lower drain connection (21), screenings coming from the lower connection (21) being deliverable by the conveying means (22), and solid matter separated in the cyclone (16) being deliverable by the conveying means (18) into the solid matter feed pipe (10).

19. Apparatus as claimed in any of claims 7 to 15, wherein the upper end portion of the issuing gas outlet (4) of the spray tower (1) opens into a conduit (13) flow-connecting it to a cyclone (16) and the lower end of the spray tower (1) has a flow connection running to a cooler (24) disposed below it, the cooler (24) being flow-connected to a screening device (19) provided with an upper drain connection (20) and lower drain connection (21), solid matter separated in the cyclone (16) being deliverable through a line (25) into the cooler (24) and screenings coming from the lower connection (21) being deliverable by the further conveying means (22) into the solid matter feed pipe (10).

Fig. 1

Fig. 2

Fig. 3

Fig. 4

Fig. 5